# EUROPEAN PATENT APPLICATION

(11) **EP 4 752 423 A1**
(43) Date of publication of application: **03.06.2026**
(21) Application number: 25218574.9
(22) Date of filing: 26.11.2025
(51) Int. Cl.: F16M 11/18, F16M 11/20, F16M 11/42, F16M 11/10

(54) **SCREEN MOVING DEVICE**

(30) Priority: 28.11.2024 CN 202411729611
(71) Applicant: Illinois Tool Works Inc., Glenview IL 60025 (US)
(72) Inventor: WANG, Dongdong, Glenview, 60025 (US)
(74) Representative: HGF

(57) **Abstract**

The present disclosure provides a screen moving device including a first bracket, a second bracket and a third bracket. The first bracket is connected to a screen. The first bracket is rotatable about an axis extending in a first direction, so as to drive the screen to rotate about the axis extending in the first direction. The second bracket is connected to the first bracket. The second bracket is configured to drive the first bracket to rotate about an axis extending in a second direction. The third bracket is connected to the second bracket, the third bracket is configured to drive the second bracket to rotate about an axis extending in a third direction. The first direction intersects with an extension direction of the screen. The screen moving device according to the present disclosure can move the screen in multiple directions.

## Description

### TECHNICAL FIELD

The present disclosure relates to a screen moving device, and in particular to a screen moving device that is rotatable in multiple directions.

### BACKGROUND

Vehicles are generally equipped with display screens for displaying parameters, navigation, entertainment or other functions. When using a screen, it is sometimes necessary to adjust the tilt angle of the screen to make it easier for a user to view. Therefore, the screen needs to be able to rotate in multiple directions to meet the user's needs.

### SUMMARY OF THE DISCLOSURE

The present disclosure provides a screen moving device including a first bracket, a second bracket and a third bracket. The first bracket is connected to a screen. The first bracket is rotatable about an axis extending in a first direction, so as to drive the screen to rotate about the axis extending in the first direction. The second bracket is connected to the first bracket. The second bracket is configured to drive the first bracket to rotate about an axis extending in a second direction. The third bracket is connected to the second bracket, the third bracket is configured to drive the second bracket to rotate about an axis extending in a third direction. The first direction intersects with an extension direction of the screen.

In some embodiments, the first direction is perpendicular to the extension directions of the screen.

In some embodiments, the screen extends in the second direction and the third direction.

In some embodiments, the second bracket has a first bracket channel, and the first bracket includes a cylindrical first shaft portion, the first shaft portion of the first bracket being inserted into the first bracket channel, and being rotatable in the first bracket channel about the axis extending in the first direction.

In some embodiments, in the second direction, two ends of the second bracket are both rotatably connected to the third bracket, and the second bracket is at least partially located within the third bracket.

In some embodiments, the screen moving device further includes a fourth bracket. In the third direction, two ends of the third bracket are rotatably connected to the fourth bracket.

In some embodiments, the screen moving device further includes a guide rail and a slider, the slider is slidably connected to the guide rail, the fourth bracket is connected to the slider, and the slider is configured to drive the fourth bracket to move in the third direction along the guide rail.

In some embodiments, the second bracket is provided, on two ends thereof, with a pair of second shaft portions extending away from each other, the third bracket is provided with a second shaft mating portion, and the pair of second shaft portions are received by the second shaft mating portion and rotatable in the second shaft mating portion. The third bracket is provided, on two ends thereof, with a pair of third shaft portions extending away from each other, the fourth bracket is provided with a third shaft mating portion, and the pair of third shaft portions are received by the third shaft mating portion and rotatable in the third shaft mating portion.

In some embodiments, the screen moving device further includes a first set of bushings arranged around the pair of second shaft portions, two axial ends of each of the first set of bushings are in contact with a surface of the second bracket and a surface of the third bracket, respectively. The screen moving device further includes a second set of bushings arranged around the pair of third shaft portions, two axial ends of each of the second set of bushings are in contact with a surface of the third bracket and a surface of the fourth bracket, respectively.

In some embodiments, the screen moving device further includes a first actuator, a second actuator and a third actuator. The first actuator is connected to the first bracket and is configured to drive the first bracket to rotate. The second actuator is connected to the second bracket and is configured to drive the second bracket to rotate. The third actuator is connected to the third bracket and is configured to drive the third bracket to rotate.

In some embodiments, the screen moving device further includes a first wire clamp, a second wire clamp and a third wire clamp, and a first wire harness, a second wire harness and a third wire harness. One end of the first wire harness is connected to the screen and the first actuator, one end of the second wire harness is connected to the second actuator, one end of the third wire harness is connected to the third actuator, the first wire clamp is connected to the second bracket, the second wire clamp is connected to the third bracket, the third wire clamp is connected to the fourth bracket, the first wire harness is clamped successively by the first wire clamp, the second wire clamp and the third wire clamp, and the second wire harness and the third wire harness are clamped by the third wire clamp.

The screen moving device according to the present disclosure can move the screen in multiple directions, and has a small size, saving the mounting space.

### BRIEF DESCRIPTION OF THE DRAWINGS

FIG. 1A is a perspective view of a screen moving device according to the present disclosure;
FIG. 1B is an exploded view of the screen moving device in FIG. 1A;
FIG. 1C shows the screen moving device in FIG. 1A and an illustrative view of a screen;
FIG. 2 is an exploded view of a support part of the screen moving device in FIG. 1B;
FIG. 3 is a perspective view of a first bracket in FIG. 2;
FIG. 4A is a perspective view of a second bracket in FIG. 2;
FIG. 4B is a perspective view of the second bracket in FIG. 4A from another perspective;
FIG. 5A is a perspective view of a third bracket in FIG. 2;
FIG. 5B is a perspective view of the third bracket in FIG. 5A from another perspective;
FIG. 6 is a perspective view of a fourth bracket in the present disclosure;
FIG. 7 is a perspective view of a bushing of a second set of bushings in FIG. 2;
FIG. 8A is a perspective view of the first bracket, the second bracket, the third bracket and the fourth bracket in the present disclosure after being assembled;
FIG. 8B is a cross-sectional view of FIG. 8A;
FIG. 9 is a perspective view of a guide rail assembly in FIG. 2; and
FIG. 10 is a rear side view of the screen moving device in FIG. 1A.

### DETAILED DESCRIPTION OF EMBODIMENTS

Various specific embodiments of the present disclosure will be described below with reference to the drawings which form part of this specification. It should be understood that although the terms indicating directions, such as "front", "rear", "upper", "lower", "left", "right", "top", and "bottom" are used in the present disclosure to describe structural parts and elements in various examples of the present disclosure, these terms are used herein only for ease of illustration and are determined based on the exemplary orientations shown in the accompanying drawings. Since the arrangements in the embodiments disclosed in the present disclosure may be in various directions, these terms indicating directions are only illustrative and should not be considered as limitations.

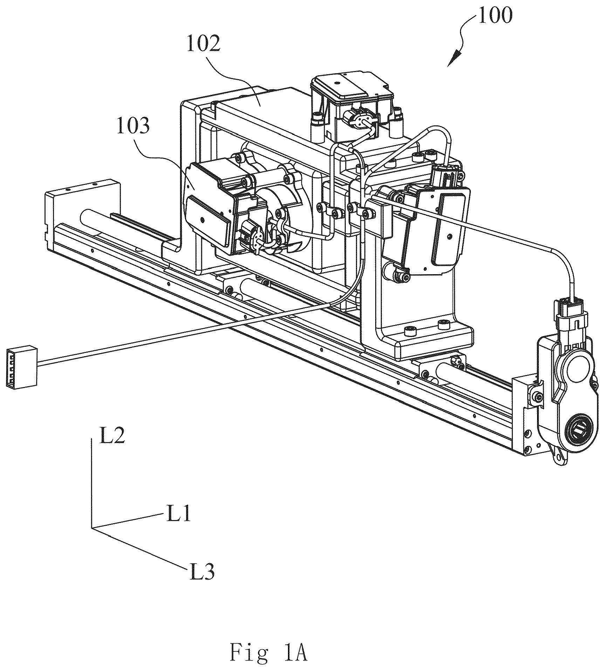

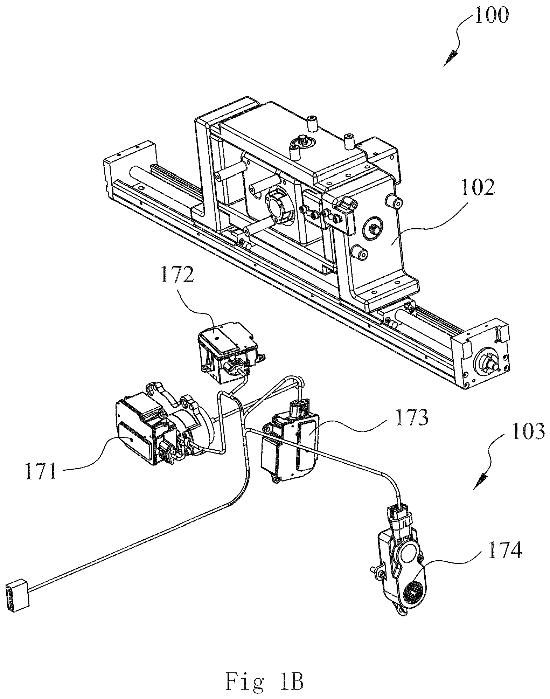

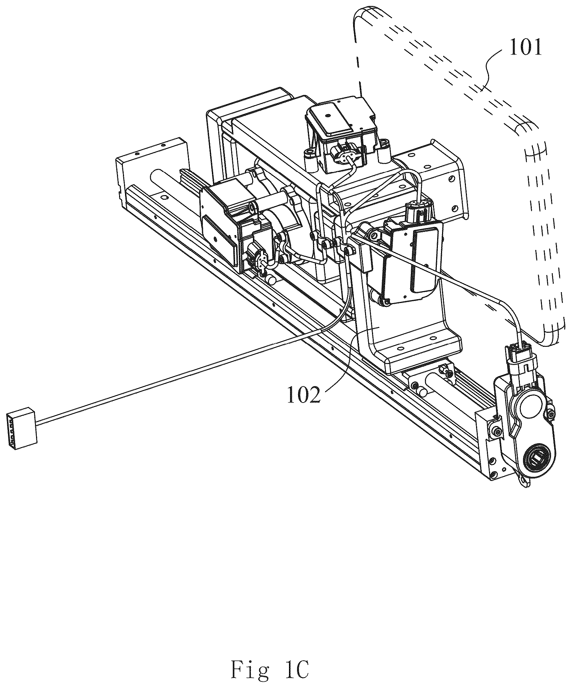

FIG. 1A is a perspective view of a screen moving device according to the present disclosure, FIG. 1B is an exploded view of the screen moving device in FIG. 1A, and FIG. 1C shows the screen moving device in FIG. 1A and an illustrative view of a screen. In FIG. 1C, the screen is indicated by dashed lines.

As shown in FIGS. 1A to 1C, a screen moving device 100 includes a support part 102 and a drive part 103. The support part 102 is connected to a screen 101, and the drive part 103 is connected to the support part 102. The drive part 103 can drive the support part 102 to move and thus move the screen. The movement referred to herein includes rotation and a motion that involves displacement. The drive part 103 includes a first actuator 171, a second actuator 172, a third actuator 173, and a fourth actuator 174. The first actuator 171, the second actuator 172, the third actuator 173 and the fourth actuator 174 can respectively drive the screen to move in different directions.

The screen moving device 100 has a first direction L1, a second direction **L2,** and a third direction L3. The first direction L1, the second direction **L2** and the third direction **L3** are perpendicular to each other. The first direction L1 passes through the plane where the screen is located, and is substantially perpendicular to an extension direction of the plane where the screen is located.

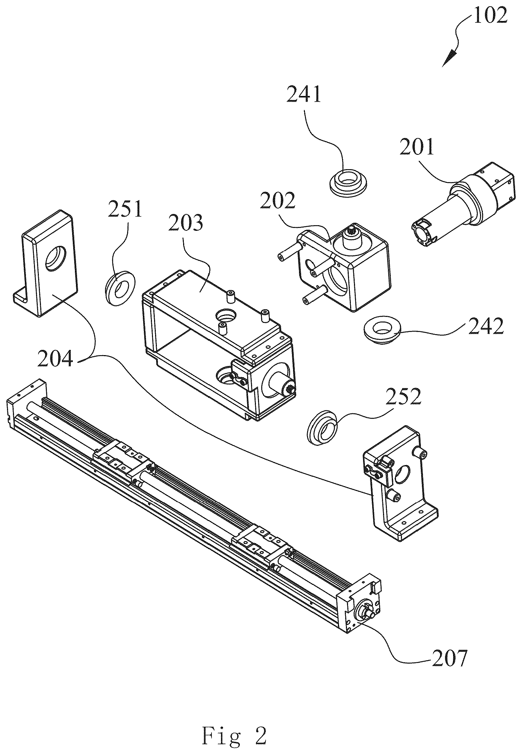

FIG. 2 is an exploded view of the support part of the screen moving device in FIG. 1B. As shown in FIG. 2, the support part 102 includes a first bracket 201, a second bracket 202, a third bracket 203, a fourth bracket 204, a guide rail assembly 207, a first set of bushings, and a second set of bushings. The first set of bushings includes bushings 241 and 242, and the second set of bushings includes bushings 251 and 252. The first bracket 201 is connected to the screen 101 and is arranged in the second bracket 202. The first bracket 201 is rotatable relative to the second bracket 202 about an axis extending in the first direction L1. The second bracket 202 is arranged in the third bracket 203 and can drive the first bracket 201 to rotate relative to the third bracket 203 about an axis extending in the second direction L2. The third bracket 203 is arranged in the fourth bracket 204 and can drive the second bracket 202 and the first bracket 201 to rotate together relative to the fourth bracket 204 about an axis extending in the third direction L3. The fourth bracket 204 is connected to the guide rail assembly 207 and can drive the third bracket 203, the second bracket 202 and the first bracket 201 to slide together on the guide rail assembly 207.

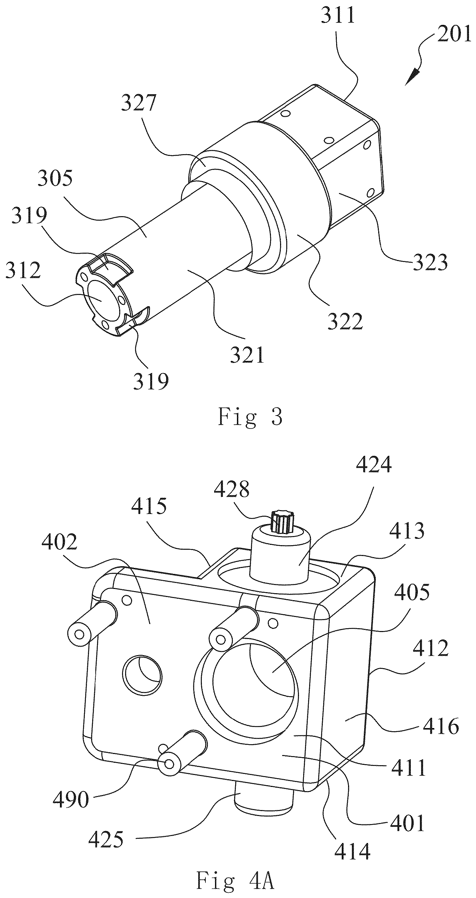

FIG. 3 is a perspective view of the first bracket in FIG. 2. As shown in FIG. 3, the first bracket 201 extends in the first direction L1 and has a first end 311 and a second end 312. The first end 311 is connected to the screen 101, and the second end 312 is connected to the second bracket 202. In a direction from the second end 312to the first end 311, the first bracket 201 has a front section 321, a middle section 322, and a rear section 323. The front section 321 is substantially cylindrical, and can be inserted into the second bracket 202 and rotate within the second bracket 202. The central axis of the front section 321 extends in the first direction L1.

A tail end of the front section 321 has a plurality of recesses 319 arranged along the circumference, and the plurality of recesses 319 form a spline structure for connection with the first actuator 171. An outer diameter of the middle section 322 is greater than an outer diameter of the front section 321, so that a step surface 327 is formed between the middle section 322 and the front section 321. Two ends of the rear section 323 are connected to the middle section 322 and the screen 101, respectively. In one embodiment of the present disclosure, the rear section 323 is cubic, and can enter a corresponding receiving part of the screen and be fixedly connected to the screen by means of a fastener.

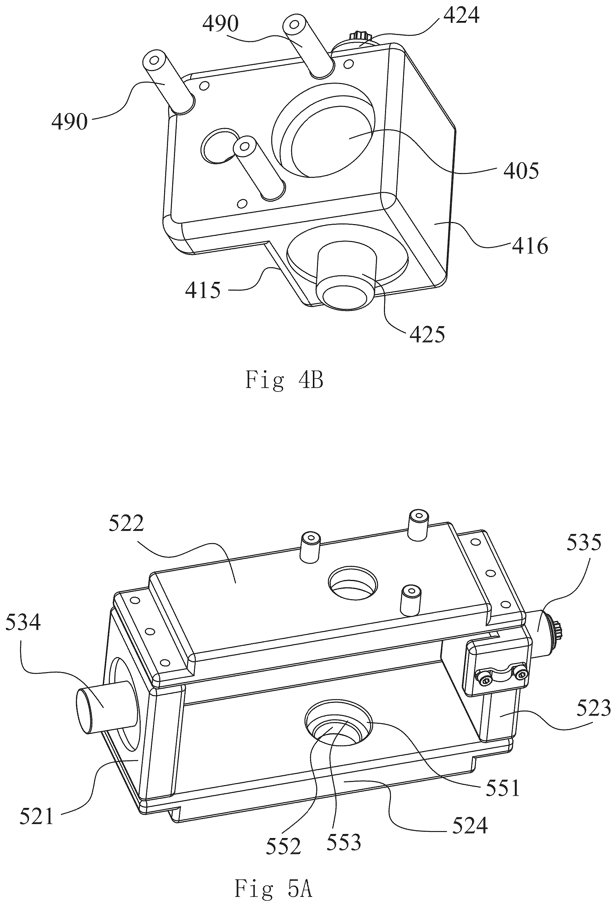

FIG. 4A is a perspective view of the second bracket in FIG. 2, and FIG. 4B is a perspective view of the second bracket in FIG. 4A from another perspective. As shown in FIGS. 4A and 4B, the second bracket 202 includes a main body 401 and an extension part 402. The main body 401 is substantially cubic and has a front side 411, a rear side 412, an upper side 413, a lower side 414, a left side 415, and a right side 416. The extension part 402 is connected to the left side 415 and is substantially flush with the front side 411. The main body 401 includes a first bracket channel 405 extending through the front side 411 and the rear side 412. A diameter of the first bracket channel 405 is approximately equal to or slightly greater than the outer diameter of the front section 321 of the first bracket 201, so that the front section 321 can enter the first bracket channel 405 and rotate in the first bracket channel 405. The first bracket 201 is inserted into the first bracket channel 405 in a direction from the rear side 412 to the front side 411 of the second bracket 202, and the tail end of the front section 321 of the first bracket 201 extends beyond the front side 411 of the second bracket 202 and can thus be connected to the drive part 103. The step surface 327 of the first bracket 201 abuts against a surface of the rear side 412 of the second bracket 202, so as to prevent the continued movement of the first bracket 201 relative to the second bracket 202 in the insertion direction.

The main body 401 further includes a pair of second shaft portions 424 and 425. The second shaft portions 424 and 425 are protrusions that respectively protrude from a surface of the upper side 413 and a surface of the lower side 414 in a direction away from each other. The second shaft portions 424 and 425 are both substantially cylindrical and are arranged coaxially. The central axes of the second shaft portions 424 and 425 extends in the second direction L2. The second shaft portion 424 is provided with an actuator connection portion 428. The actuator connection portion 428 has an anti-rotation shaped outer contour, and can be connected to the second actuator 172.

The second bracket 202 further includes a plurality of support posts 490. The plurality of support posts 490 form an actuator mounting portion for mounting the first actuator 171.

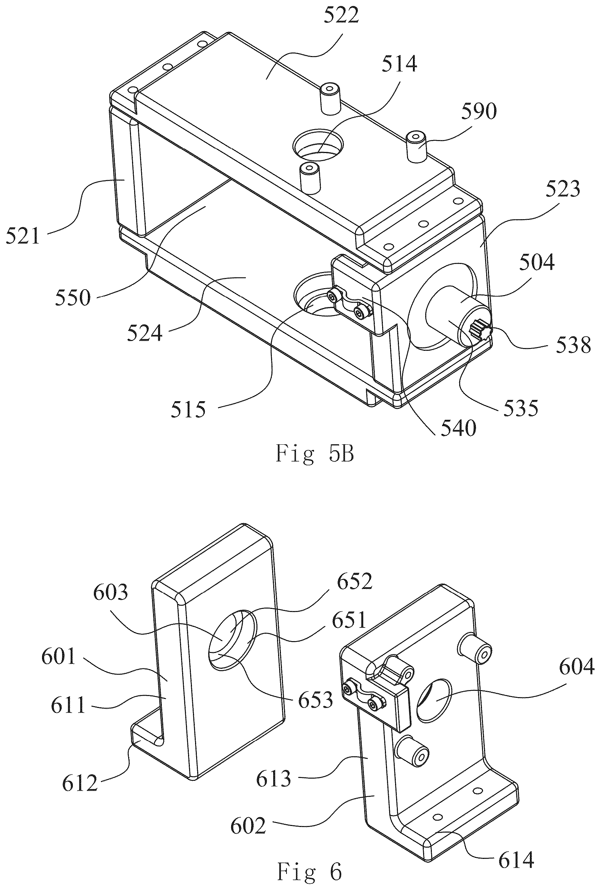

FIG. 5A is a perspective view of the third bracket in FIG. 2, and FIG. 5B is a perspective view of the third bracket in FIG. 5A from another perspective.

As shown in FIGS. 5A and 5B, the third bracket 203 is substantially a cubic frame formed by four plates assembled together. The third bracket includes a first plate 521, a second plate 522, a third plate 523 and a fourth plate 524 which are connected in sequence. The first plate 521 and the third plate 523 are arranged opposite each other, and the second plate 522 and the fourth plate 524 are arranged opposite each other. The first plate 521, the second plate 522, the third plate 523 and the fourth plate 524 together enclose an accommodating space 550 having openings on both sides. The accommodating space 550 is configured to accommodate the second bracket 202.

The second plate 522 and the fourth plate 524 are provided with second shaft mating portions 514 and 515, respectively. In one embodiment of the present disclosure, the second shaft mating portions 514 and 515 are holes running through the second plate 522 and the fourth plate 524, respectively. The second shaft mating portions 514 and 515 are respectively configured to receive the second shaft portions 424 and 425 and enable the second shaft portions 424 and 425 to rotate in the second shaft mating portions 514 and 515. The actuator connection portion 428 on the second shaft portion 424 can pass through the second shaft mating portion 514 and thus extend out of an outer surface of the second plate 522. Each of the second shaft mating portions 514 and 515 includes an inner side section 551 having a larger diameter and an outer side section 552 having a smaller diameter, and a step surface 553 is formed between the inner side section 551 and the outer side section 552. The step surfaces 553 are configured to prevent detachment of the bushings 241 and 242. A plurality of support posts 590 are provided on an outer side of the second plate 522. The plurality of support posts 590 are configured to mount the second actuator 172.

The first plate 521 and the third plate 523 further respectively include a pair of third shaft portions 534 and 535. The third shaft portions 534 and 535 are protrusions that respectively protrude from an outer surface of the first plate 521 and an outer surface of the third plate 523 in a direction away from each other. The third shaft portions 534 and 535 are both substantially cylindrical and are arranged coaxially. The central axes of the third shaft portions 534 and 535 extend in the third direction L3. The third shaft portion 535 is provided with an actuator connection portion 538. The actuator connection portion 538 has an anti-rotation shaped outer contour and can be connected to the third actuator 173.

The third plate 523 has a wire clamp mounting portion 540 on one side thereof for mounting wire clamps.

In one embodiment of the present disclosure, the third bracket 203 is of an integral structure.

FIG. 6 is a perspective view of the fourth bracket in the present disclosure. As shown in FIG. 6, the fourth bracket 204 includes a first side portion 601 and a second side portion 602. In one embodiment of the present disclosure, the first side portion 601 and the second side portion 602 are separate components, and the first side portion 601 and the second side portion 602 are symmetrically arranged. The first side portion 601 is substantially an L-shaped plate and has a vertical portion 611 and a horizontal portion 612. The horizontal portion 612 extends from one side of the bottom of the vertical portion 611. A third shaft mating portion 603 is provided on the vertical portion 611. The third shaft mating portion 603 is a recess formed by the first side portion 601 recessing outward from the inside. Similarly, the second side portion 602 has a vertical portion 613 and a horizontal portion 614. The horizontal portion 614 extends from one side of the bottom of the vertical portion 613. A third shaft mating portion 604 is provided on the vertical portion 613. The third shaft mating portion 604 is a through hole running through the vertical portion 613. The third shaft mating portions 603 and 604 are arranged coaxially and are configured to receive the third shaft portions 534 and 535 of the third bracket 203, respectively. The third bracket 203 can be mounted between the vertical portions 611 and 613, and the horizontal portions 612 and 614 can be connected to the guide rail assembly 207.

Each of the third shaft mating portions 603 and 604 includes an inner side section 651 having a larger diameter and an outer side section 652 having a smaller diameter, and a step surface 653 is formed between the inner side section 651 and the outer side section 652. The step surface 653 is configured to prevent detachment of the bushings 251 and 252. In another embodiment of the present disclosure, the fourth bracket 204 is of an integral structure, such as a frame having four or three sides.

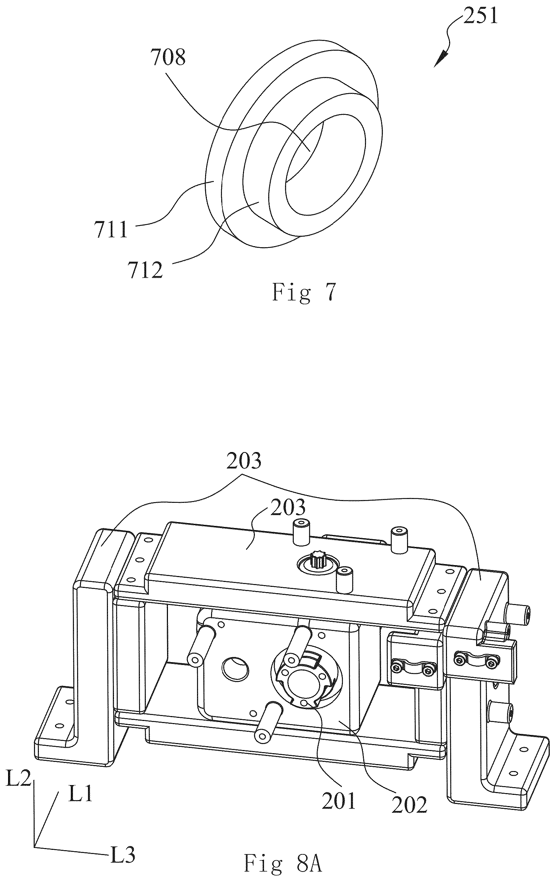

FIG. 7 is a perspective view of one bushing in the second set of bushings in FIG. 2. Referring to FIGS. 2 and 7, the second set of bushings includes bushings 251 and 252, and the first set of bushings includes bushings 241 and 242. The bushings 241, 242, 251 and 252 are similar in structure. The structure of bushing 251 will be described below as an example. The bushing 251 is substantially cylindrical and has a mounting channel 708. The third shaft portion 504 can enter the mounting channel 708. The bushing 251 has a first section 711 having a larger outer diameter and a second section 712 having a smaller outer diameter. During mounting, the first section 711 is arranged facing the third shaft portion 504, and the bushing 251 is fitted over the third shaft portion 504. That is, the first section 711 is closer to the outer surface of the third bracket 203 than the second section 712. The bushing 251 is made of an elastic material and has a vibration damping function.

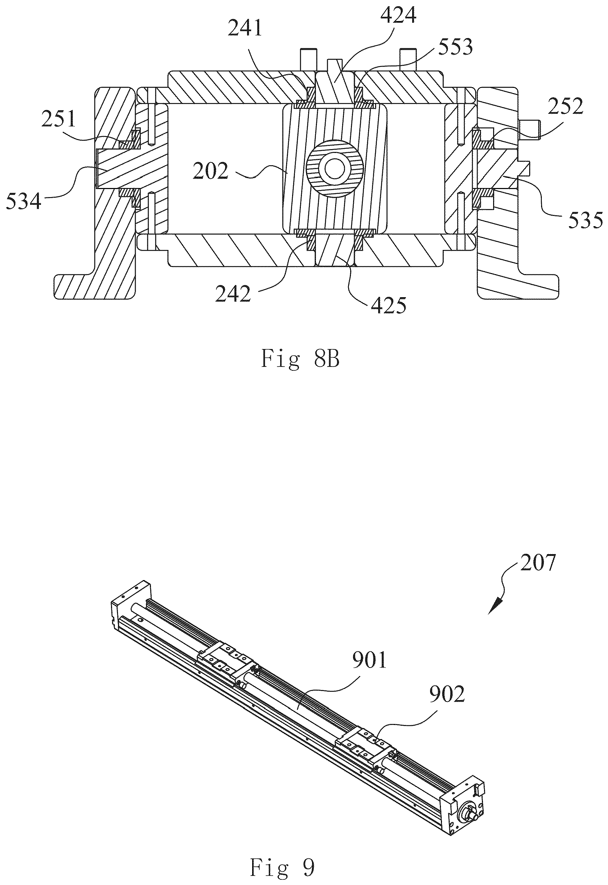

FIG. 8A is a perspective view of the first bracket, the second bracket, the third bracket and the fourth bracket in the present disclosure after being assembled, and FIG. 8B is a cross-sectional view of FIG. 8A. As shown in FIGS. 8A and 8B, the first bracket 201 is inserted into the second bracket 202 and can rotate relative to the second bracket 202 about the axis extending in the first direction L1, the second bracket 202 is located in the third bracket 203 and can rotate relative to the third bracket 203 about the axis extending in the second direction L2, and the third bracket 203 is located in the fourth bracket 204 and can rotate relative to the fourth bracket about the axis extending in the third direction, so that the screen can rotate about axes in three directions.

The bushings 241 and 242 are respectively fitted over the second shaft portions 424 and 425 and are located between the second bracket 202 and the step surfaces 553 of the second shaft mating portions 514 and 515, thereby reducing the radial and axial vibrations of the second shaft portions 424 and 425. The bushings 251 and 252 are respectively fitted over the third shaft portions 534 and 535 and are located between the third bracket 202 and the step surfaces 653 of the third shaft mating portions 603 and 604, thereby reducing the radial and axial vibrations of the second shaft portions 534 and 535.

FIG. 9 is a perspective view of the guide rail assembly in FIG. 2. As shown in FIG. 9, the guide rail assembly 207 has a guide rail 901 and a slider 902. The slider 902 is slidably connected to the guide rail 901. The fourth bracket 204 is connected to the slider 902. The slider 902 can drive the fourth bracket 204 to move in the third direction along the guide rail 902.

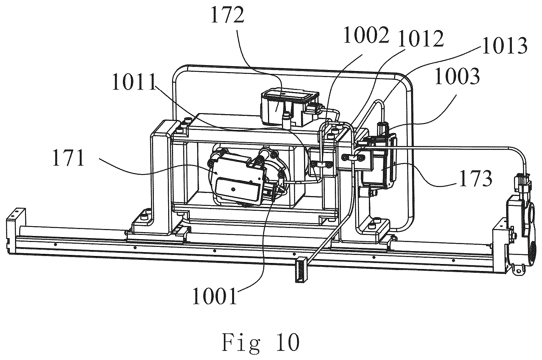

FIG. 10 is a rear side view of the screen moving device in FIG. 1A. As shown in FIG. 10, the first actuator 171 is arranged on the second bracket 202 and is connected to the second end 312 of the first bracket 201, so as to drive the first bracket 201 to rotate. The second actuator 172 is mounted on the third bracket 203 and is connected to the actuator connection portion 428 of the second bracket 202, so as to drive the second bracket 202 to rotate. The third actuator 173 is mounted on the fourth bracket and is connected to the actuator connection portion 538 of the third bracket, so as to drive the third bracket 203 to rotate. The fourth actuator 174 is connected to the guide rail assembly 207, so as to drive the slider 902 to move. The first actuator 171, the second actuator 172, the third actuator 173, and the fourth actuator 174 are all connected to a control system and receive signals from the control system to adjust the angle and position of the screen. In one embodiment of the present disclosure, the first actuator 171, the second actuator 172, the third actuator 173 and the fourth actuator 174 have a memory function to enable the screen to be adjusted to a stored angle and position.

In the present disclosure, it is also possible to turn off the drive part 103 and manually adjust the angle and position of the screen.

In the present disclosure, the first bracket 201 is directly connected to the screen, and during the rotation of the screen about the axis extending in the first direction (i.e., the screen switches between a landscape orientation and a portrait orientation), the second bracket 202 and the third bracket 203 do not rotate, which saves on the mounting space required for the support part 102.

The screen moving device further includes a first wire clamp 1001, a second wire clamp 1002, a third wire clamp 1003, a first wire harness 1011, a second wire harness 1012, and a third wire harness 1013. One end of the first wire harness 1011 is connected to the screen and the first actuator 171, one end of the second wire harness 1012 is connected to the second actuator 172, and one end of the third wire harness 1013 is connected to the third actuator 173. The first wire harness 1011, the second wire harness 1012, and the third wire harness 1013 can transmit signals and power to the first actuator 171, the second actuator 172 and the third actuator 173. During rotation of the first bracket 201, the second bracket 202 or the third bracket 203, the corresponding first wire harness 1011, second wire harness 1012 or third wire harness 1013 can be driven to move together. To prevent the first wire harness 1011, the second wire harness 1012 and the third wire harness 1013 from tangling due to excessive movement range during the movement, in the present disclosure a first wire clamp 1001, a second wire clamp 1002 and a third wire clamp 1003 are provided to limit the range of movement of the first wire harness 1011, the second wire harness 1012 and the third wire harness 1013.

The first wire clamp 1001 is arranged at the first actuator 171, that is, connected to the second bracket 202, and the first wire clamp 1001 clamps the first wire harness 1011. The first wire clamp 1001 divides the first wire harness 1011 into a first wire harness front section close to the first actuator 171 and a first wire harness rear section away from the first actuator 171. The movement of the first wire harness rear section is limited. The second wire clamp 1002 is connected to the third bracket 203 and clamps the second wire harness 1012. The second wire clamp 1002 divides the second wire harness 1012 into a second wire harness front section close to the second actuator 172 and a second wire harness rear section away from the second actuator 172. The movement of the second wire harness rear section is limited. The third wire clamp 1003 is connected to the fourth bracket 204 and clamps the third wire harness 1013. The third wire clamp 1003 divides the third wire harness 1013 into a third wire harness front section close to the third actuator 173 and a third wire harness rear section away from the third actuator 173. The movement of the third wire harness rear section is limited.

The screen moving device according to the present disclosure can move the screen in multiple directions, and has a small size, saving the mounting space.

While the present disclosure has been described in conjunction with the examples of embodiments outlined above, various alternatives, modifications, variations, improvements and/or substantial equivalents, whether known or that are or may be presently foreseen, may become apparent to those having at least ordinary skill in the art. The technical effects and technical problems in the specification are exemplary and are not limiting. It should be noted that the embodiments described in the specification may have other technical effects and can solve other technical problems. Accordingly, the examples of embodiments of the present disclosure, as set forth above, are intended to be illustrative, not limiting. Various changes may be made without departing from the spirit or scope of the invention. Therefore, the present disclosure is intended to embrace all known or earlier developed alternatives, modifications, variations, improvements and/or substantial equivalents.

## Claims

1. A screen moving device, comprising:
a first bracket (201) connected to a screen, the first bracket (201) being rotatable about an axis extending in a first direction, so as to drive the screen to rotate about the axis extending in the first direction **(L1);**
a second bracket (202) connected to the first bracket (201), the second bracket (202) being configured to drive the first bracket to rotate about an axis extending in a second direction (L2); and
a third bracket (203) connected to the second bracket (202), the third bracket (203) being configured to drive the second bracket (202) to rotate about an axis extending in a third direction (L2);
wherein the first direction intersects with an extension direction of the screen.

2. The screen moving device of claim 1, wherein the first direction **(L1)** is perpendicular to the extension directions of the screen.

3. The screen moving device of claim 1, wherein the screen extends in the second direction (L2) and the third direction (L3).

4. The screen moving device of claim 1, wherein the second bracket (202) has a first bracket channel (405), and the first bracket (201) comprises a cylindrical first shaft portion (305), the first shaft portion (305) of the first bracket (201) being inserted into the first bracket channel (405), and being rotatable in the first bracket channel (405) about the axis extending in the first direction.

5. The screen moving device of claim 1, wherein in the second direction, two ends of the second bracket (202) are both rotatably connected to the third bracket (203), and the second bracket (202) is at least partially located within the third bracket (203).

6. The screen moving device of claim 1, further comprising a fourth bracket (204), wherein in the third direction, two ends of the third bracket (203) are rotatably connected to the fourth bracket (204).

7. The screen moving device of claim 6, further comprising a guide rail (901) and a slider (902), the slider (902) being slidably connected to the guide rail (901), the fourth bracket (204) being connected to the slider (902), and the slider (902) being configured to drive the fourth bracket (204) to move in the third direction along the guide rail (902).

8. The screen moving device of claim 6, wherein the second bracket (202) is provided, on two ends thereof, with a pair of second shaft portions (424, 425) extending away from each other, the third bracket is provided with a second shaft mating portion (514), and the pair of second shaft portions (424, 425) are received by the second shaft mating portion (514) and rotatable in the second shaft mating portion (514); and
wherein the third bracket (203) is provided, on two ends thereof, with a pair of third shaft portions (504) extending away from each other, the fourth bracket is provided with a third shaft mating portion (604), and the pair of third shaft portions (504) are received by the third shaft mating portion (604) and rotatable in the third shaft mating portion (604).

9. The screen moving device of claim 7, further comprising:
a first set of bushings arranged around the pair of second shaft portions (424, 425), two axial ends of each of the first set of bushings being in contact with a surface of the second bracket (202) and a surface of the third bracket, respectively; and
a second set of bushings arranged around the pair of third shaft portions (504), two axial ends of each of the second set of bushings being in contact with a surface of the third bracket (203) and a surface of the fourth bracket, respectively.

10. The screen moving device of claim 1, further comprising a first actuator (171), a second actuator (172) and a third actuator (173), the first actuator (171) being connected to the first bracket (201) and being configured to drive the first bracket (201) to rotate, the second actuator (172) being connected to the second bracket (202) and being configured to drive the second bracket (202) to rotate, and the third actuator (173) being connected to the third bracket (203) and being configured to drive the third bracket (203) to rotate.

11. The screen moving device of claim 6, further comprising a first wire clamp (1001), a second wire clamp (1002) and a third wire clamp (1003), and a first wire harness (1011), a second wire harness (1012) and a third wire harness (1013), one end of the first wire harness (1011) being connected to the screen and the first actuator (171), one end of the second wire harness (1012) being connected to the second actuator (172), one end of the third wire harness (1013) being connected to the third actuator (173), the first wire clamp (1001) being connected to the second bracket (202), the second wire clamp (1002) being connected to the third bracket (203), the third wire clamp (1003) being connected to the fourth bracket (204), the first wire harness (1011) being clamped successively by the first wire clamp (1001), the second wire clamp (1002) and the third wire clamp (1003), and the second wire harness (1012) and the third wire harness (1013) being clamped by the third wire clamp (1003).
